# FASCICULE DE BREVET EUROPEEN

(11) **EP 3 828 072 B1**
(45) Date de publication et mention de la délivrance du brevet: **20.09.2023**
(21) Numéro de dépôt: 20207499.3
(22) Date de dépôt: 13.11.2020
(51) Int. Cl.: B62M 6/90, B62J 43/13, B62J 43/16, B62J 43/20, B62J 45/00, B62M 6/45, A45F 3/04, A45C 15/00, B60L 50/20, B60L 50/60, B60L 53/80, H01M 50/249, H01M 50/20, H01M 10/42, H01M 50/256, B62H 3/00

(54) **ALIMENTATION D'UN VÉHICULE ÉLECTRIQUE À GUIDON PAR BATTERIE**
STROMVERSORGUNG ÜBER BATTERIE FÜR EIN ELEKTROFAHRZEUG MIT LENKSTANGE
POWER SUPPLY BY BATTERY OF AN ELECTRIC VEHICLE WITH HANDLEBAR

(30) Priorité: 27.11.2019 FR 1913350
(43) Date de publication de la demande: 02.06.2021
(73) Titulaire: Electricité de France, 75008 Paris (FR)
(72) Inventeur: LUCIDARME, Thierry, 78460 CHEVREUSE (FR)
(74) Mandataire: Plasseraud IP

(56) Documents cités:
- EP-A1- 2 462 834
- WO-A1-2009/144525
- WO-A1-2019/075316
- CN-A- 106 601 957
- DE-A1-102011 051 357
- FR-A1- 2 968 857
- FR-A1- 2 978 415
- US-A1- 2018 286 167
- US-A1- 2019 067 751

## Description

### Domaine technique

La présente invention concerne le contrôle d'une batterie d'un véhicule électrique à guidon tel qu'une bicyclette électrique.

### Technique antérieure

Selon l'état de la technique, une bicyclette électrique comprend une batterie, la batterie alimentant un moteur électrique propulsant ladite bicyclette. L'utilisation de tels véhicules se popularisant, de tels véhicules se trouvent fabriqués en nombres croissants, les composants les formants étant par voie de conséquence soumis à une demande de plus en plus élevée. Tandis que les pièces formants la structure mécanique d'une bicyclette ou le moteur électrique de la dites bicyclette sont aisément disponible, il est relativement plus difficile de s'assurer un approvisionnement en batterie, les batteries utilisant des matériaux très spécifiques et à disponibilité limitée. La présente invention a, entre autres, pour objectif, de réduire la difficulté d'approvisionnement en batteries. FR2968857A1 décrit un système d'alimentation électrique d'un véhicule léger muni d'un moteur électrique, comprenant un sac portable contenant une batterie, un câble de connexion pour relier de manière manuellement détachable la batterie au moteur électrique, un dispositif de connexion permettant de relier la batterie à une source de courant extérieure, des moyens électroniques aptes à contrôler le fonctionnement du moteur, un afficheur pouvant être fixé de manière manuellement détachable au véhicule, et un dispositif de surveillance de l'état de la batterie apte à détecter une phase de recharge de la batterie et à émettre un signal indiquant la recharge de la batterie pour l'afficheur. FR2968857A1 divulgue un procédé selon le préambule de la revendication 1 et un sac-à-dos selon le préambule de la revendication 7.

### Résumé

La présente invention est définie par les revendications indépendantes ci-jointes. D'autres caractéristiques et avantages découlant des concepts divulgués ici sont exposés dans la description qui suit. Ils se dégagent en partie de la description ou pourront être acquis par la pratique des technologies décrites. Les caractéristiques et avantages de ces concepts peuvent être réalisés et obtenus au moyen des instruments et combinaisons signalés en particulier dans les revendications ci-jointes. Ces caractéristiques et d'autres caractéristiques des technologies décrites transparaîtront plus largement au travers de la description suivante et des revendications ci-jointes, ou pourront être déduites de la pratique des concepts exposés ici.

### Brève description des dessins

D'autres caractéristiques, détails et avantages apparaîtront à la lecture de la description détaillée ci-après, et à l'analyse des dessins annexés, sur lesquels :
**Fig. 1A**

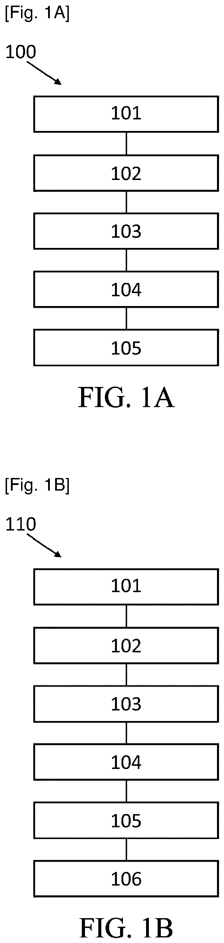

   [Fig. 1A] est une représentation d'exemple de procédé selon le présent exposé.
**Fig. 1B**
   [Fig. 1B] est une représentation d'exemple de procédé selon le présent exposé.
**Fig. 2A**

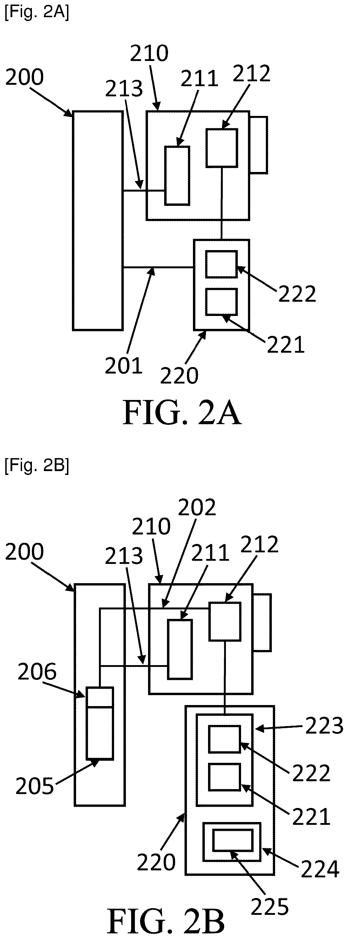

   [Fig. 2A] est une représentations d'exemple de véhicule électrique, de sac-à-dos et de terminal portable mettant en oeuvre un exemple de procédé selon le présent exposé.
**Fig. 2B**
   [Fig. 2B] est une représentations d'exemple de véhicule électrique, de sac-à-dos et de terminal portable mettant en oeuvre un exemple de procédé selon le présent exposé.
**Fig. 3A**

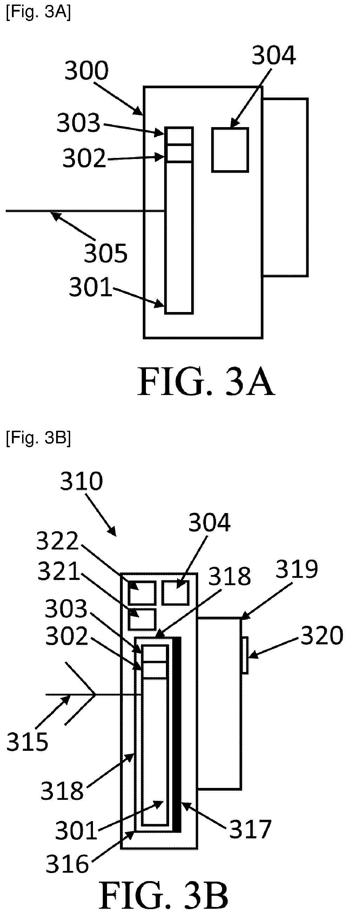

   [Fig. 3A] est une représentation d'exemple de sac-à-dos selon le présent exposé.
**Fig. 3B**
   [Fig. 3B] est une représentation d'exemple de sac-à-dos selon le présent exposé.
**Fig. 4**

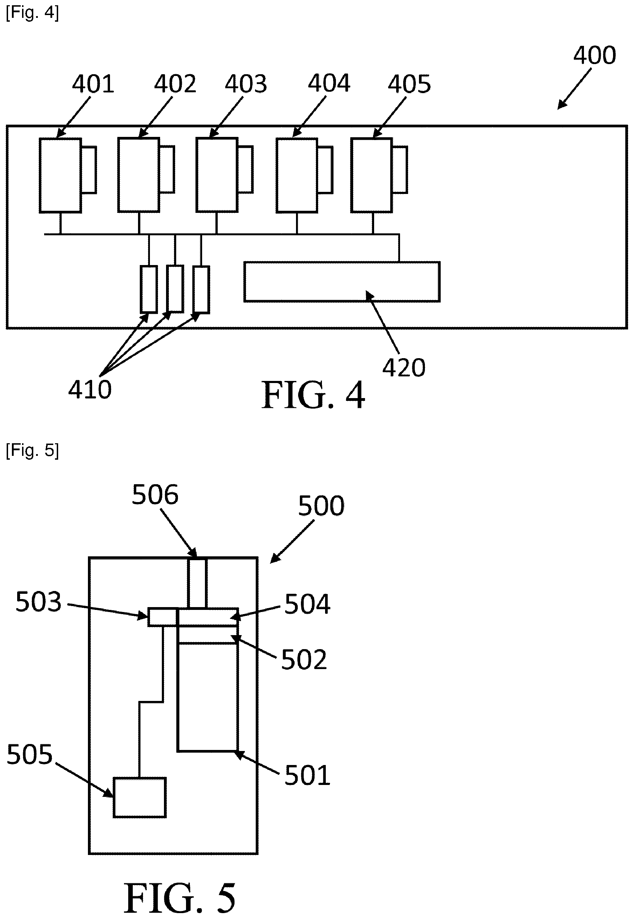

   [Fig. 4] est une représentation d'un exemple de station de recharge selon le présent exposé.
**Fig. 5**
   [Fig. 5] est une représentation d'un exemple de véhicule électrique selon le présent exposé.
**Fig. 6**

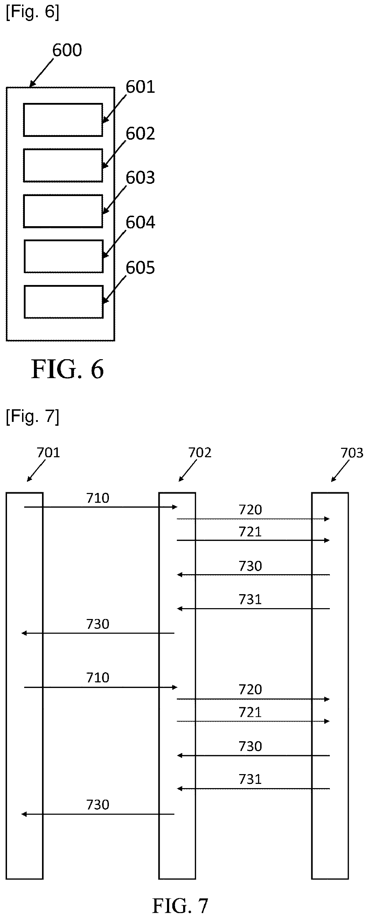

   [Fig. 6] est une représentation d'un exemple de station de location selon le présent exposé.
**Fig. 7**
   [Fig. 7] est une représentation d'un exemple d'échange de données lors d'un procédé selon cet exposé.

### Description des modes de réalisation

Cet exposé concerne un procédé destiné à alimenter en électricité un véhicule électrique à guidon. Un véhicule électrique à guidon peut comporter un certain nombre de roues, par exemple une, deux, trois ou quatre roues, certaines ou l'ensemble de ces roues étant directrices, au moins l'une de ces roues étant manoeuvrable par une ou par les deux mains d'un utilisateur à l'aide d'un guidon permettant le guidage de la ou des roues directrices, le guidon comprenant une poignée, deux poignées ou un volant permettant sa prise en main. Des exemples de tel véhicule électrique comprennent une bicyclette, motocyclette, trottinette, motocyclette ou scooter. Le véhicule électrique selon cet exposé est propulsé au moins en partie au moyen d'un moteur électrique intégré au véhicule électrique. Le véhicule électrique peut également être au moins en partie propulsé par l'effort musculaire d'un utilisateur. Le moteur électrique peut être en appoint ou en remplacement de l'apport d'énergie musculaire de la part d'un utilisateur en vue de la propulsion dudit véhicule électrique.

Dans de nombreuses situations, des véhicules électriques sont partagés et mis à la disposition d'utilisateurs dans des lieux publics. Ceci entraine une multiplication de véhicules électrique, et expose ces nombreux véhicules électriques à être endommagés. Il est donc souhaitable de faire en sorte que de tels véhicules électriques aient peut de valeur, ou qu'ils n'intègrent peu de composants de valeur. Le présent exposé vise entre autres à réaliser ceci en évitant l'intégration d'une batterie ou d'unités de traitement à un tel véhicule électrique, en transférant la batterie sur un sac-à-dos porté par l'utilisateur, le sac-à-dos comprenant également une passerelle à réseau permettant la connexion à un terminal portable, donnant donc accès à l'utilisation des capacités de traitement de données du terminal portable dans le cadre du contrôle du véhicule électrique. Le présent exposé vise donc à éviter d'avoir à intégrer une unité de traitement de donnée ou une batterie à un véhicule électrique. Dans certains cas, le nombre d'utilisateurs de véhicules électriques partagés est inférieur aux nombres de véhicules électriques partagés disponibles. Dans de tels cas, le fait de lier la batterie et la capacité de traitement de données à l'utilisateur par le biais d'un sac-à-dos et d'un terminal portable permet de réduire le nombre de batteries ou d'unités de traitement utilisées, ceci ayant un impact positif tant au plan économique qu'au plan de l'environnement. Il est également à noter qu'un utilisateur sera plus prône à maintenir en bon état une batterie et un terminal portable lui étant personnellement confié en comparaison à de tels composants intégrés dans un éventuel véhicule électrique partagé. Dis d'autre manière, le présent exposé offre la possibilité de transférer des composants ou fonctions à haute valeur ajoutée hors d'un véhicule électrique et vers l'utilisateur. Pour ce qui concerne le traitement des données, la possibilité d'utiliser un terminal portable permet de profiter d'une unité de traitement de donnée se trouvant disponible, et d'éviter l'utilisation d'une unité de traitement de données dédiée. Le présent exposé offre également la possibilité de réduire des efforts de maintenance d'un véhicule électrique ou d'un parc de véhicules électriques. Le présent exposé offre également la possibilité de réduire le poids d'un véhicule électrique et par voie de conséquence ça facilité de manoeuvre, rendant son utilisation plus accessible.

La Figure 1A représente un exemple de procédé 100 selon cet exposé. Ce procédé 100 peut être mis en oeuvre par exemple au moyen du véhicule électrique 200, du sac-à-dos 210 et du terminal portable 220 représentés par la Figure 2A. Le procédé 100 destiné à alimenter en électricité un véhicule électrique à guidon 200 à partir d'une batterie 211 placée dans un sac-à-dos 210, comprend dans le bloc 101 la transmission, par le véhicule électrique, de données d'entrée.

Ces données d'entrée sont des données au format analogique ou numérique. Dans certains cas, ces données d'entrée comprennent des données relatives à l'état du véhicule électrique. Dans certains cas, ces données d'entrée comprennent des données relatives à des composants du véhicule électrique, comprennent par exemple un ou des identificateurs de composants, ou un ou des statuts ou états d'un ou plusieurs composants du véhicule électrique. Dans certains cas, les données d'entrée comprennent des paramètres de mise en route, tels que des données d'entrée relative à l'activation d'un actuateur de mise en route placé sur le véhicule électrique ou à la saisie, sur un organe de saisie tel qu'un écran tactile ou un clavier placé sur le véhicule électrique, d'un code permettant la mise en route du véhicule électrique. Dans certains cas, les données d'entrée comprennent des paramètres d'arrêt, tels que des données d'entrée relative à l'activation d'un actuateur d'arrêt placé sur le véhicule électrique ou à la saisie, sur un organe de saisie tel qu'un écran tactile ou un clavier placé sur le véhicule électrique, d'un code permettant l'arrêt du véhicule électrique. Dans certains cas, les données d'entrée comprennent des paramètres de degré d'assistance, tels que des données d'entrée relative à compenser au moyen d'un moteur électrique du véhicule électrique la contribution musculaire d'un utilisateur à la propulsion du véhicule électrique. Dans certains cas, les données d'entrée comprennent des paramètres de position, de mouvement, de couple, d'angle, de vitesse de rotation tels que par exemple la position, le mouvement, couple, angle ou vitesse de rotation d'une pédale, d'un pédalier, d'une roue ou du guidon. Dans certains cas, les données d'entrée comprennent des paramètres d'action de freinage qui peuvent par exemple mener à couper l'alimentation du moteur électrique du véhicule électrique par la batterie, par exemple conformément à une norme de sécurité, ou la recharge de la batterie par utilisation du moteur en mode génératrice lors du freinage. Dans certains cas, les données d'entrée comprennent des paramètres de durée, tels qu'une durée d'utilisation du véhicule électrique.

Dans certains cas, les données d'entrée ont un format de bus de données Controller Area Network, CAN. Ce bus de données, qui peut être inclus au sac-à-dos et au véhicule électrique afin de faciliter leur communication, peut par exemple mettre en application une approche de multiplexage, afin de raccorder un certain nombre de contrôleurs qui seront en mesure de communiquer à tour de rôle. Cette technique réduit ou élimine le câblage de lignes dédiées pour chaque information à faire transiter, en d'autres termes permet d'éviter les connexions point-à-point. Le bus de données peut utiliser la norme ISO 11898. Un tel bus peut être un bus de données série bidirectionnel half-duplex. L'accès au bus de données CAN peut suivre la technique CSMA/CR (écoute de chaque station avant de parler mais sans tour de parole, avec résolution des collisions par priorité). Les données transmises par le bus peuvent adopter un format de bit appelée « Nominal Bit Time », chaque bit étant constitué de plusieurs segments cadencés par l'horloge interne de chaque noeud comprenant un segment de synchronisation pour synchroniser différents noeuds connectés par l'intermédiaire du bus, un segment de propagation pour compenser les phénomènes de propagation sur le bus et un segment de phase pour compenser les erreurs de phase détectées lors des transitions. Un brochage sur le bus de données peut utiliser un connecteur DE-9 à 9 broches. Les phénomènes de propagation sur le bus peuvent être liés à l'utilisation d'un câble spécifique, ou mener à adapter la communication à l'utilisation de différents câbles ou adaptateurs selon cet exposé.

Dans certains cas, tel que représenté par exemple sur la Figure 2A, les données d'entrée 201 sont reçues par le terminal portable 220. La réception de ces données par le terminal portable 220 permet à un tel terminal portable d'exploiter ces données. L'exploitation de ces données peut avoir lieu directement en utilisant une unité de traitement intégrée au terminal portable, ou à distance en utilisant une communication du terminal portable à une autre unité de traitement accessible par réseau. Le terminal portable peut également router ces données vers une passerelle à réseau 212 placée dans le sac-à-dos 210 selon cet exposé.

La Figure 1A comprend un bloc 102 de contrôle de la batterie au moyen d'un système de contrôle de la batterie 222. Le système 222 de contrôle de la batterie ou Battery Management System (BMS) 222 est un système électronique ou informatique permettant le contrôle et la charge de différents éléments d'une batterie, en particulier une batterie d'accumulateurs. Le système 222 de contrôle de la batterie peut par exemple surveiller la tension totale ou de cellules individuelles de la batterie, la température moyenne, ou températures de cellules individuelles, l'état de charge (SOC) ou la profondeur de décharge (DOD) indiquant le niveau de charge de la batterie, l'état de santé (SOH) mesurant l'état général de la batterie, ou un courant dans ou hors de la batterie. Le système 222 de contrôle de la batterie peut permettre le suivit de données telles que le courant de charge maximum (CCA), le courant de décharge maximum (DCL), l'énergie fournie depuis la dernière charge ou le dernier cycle de charge, l'énergie totale utilisée depuis la première utilisation ou le temps total de fonctionnement depuis la première utilisation. Le système 222 de contrôle de la batterie peut empêcher la batterie de fonctionner en dehors d'une plage de fonctionnement normal en évitant une surintensité, surtension (lors du chargement), sous-tension (lors de la décharge), particulièrement pour des batteries à plomb-acide et cellules Li-ion, la surchauffe, la sous-température ou la surpression, en particulier pour des batteries NiMH. Le système 222 de contrôle peut comprendre un régulateur passif permettant d'atteindre un équilibre entre différentes cellules en "by-passant" certaines cellules lorsque leur tension atteint un certain niveau. Le système 222 de contrôle de la batterie peut comprendre un régulateur actif intelligent permettant d'allumer et d'interrompre une partie du chargement afin de réaliser un équilibrage de charge. Le système222 de contrôle de la batterie peut comprendre un élément d'affichage signalant l'état de la batterie, et permettant de la protéger d'un dysfonctionnement. Le système de contrôle de la batterie est à l'origine de commandes de contrôles de la batterie.

La Figure 1A comprend un bloc 103 de contrôle du véhicule électrique 200 au moyen d'un système 221 de contrôle du véhicule 200. Ce composant 221 permet de contrôler le véhicule électrique 200. Le contrôleur ou système de contrôle 221 du véhicule électrique put être relié à différents composants du véhicule électrique 200 tels que, par exemple, le moteur, un écran d'affichage ou des freins. Le système 221 de contrôle du véhicule 200 peut recevoir des informations ou données concernant le comportement d'un utilisateur, par exemple liés à la mise en route, à l'arrêt ou au couple de pédalage appliqué au véhicule électrique 200. Le système 221 de contrôle du véhicule électrique peut intégrer les paramètres qui qualifient le comportement du véhicule électrique 200 en fonction d'un profil utilisateur déterminé. Le système 221 de contrôle du véhicule électrique peut réguler la consommation électrique et piloter le moteur électrique dans différentes phases de fonctionnement telles que démarrage, régime continu, accélération, etc. à partir d'informations ou de données transmises par des capteurs, par exemple pas le biais des données d'entrée. Dans certains cas, le système 221 de contrôle du véhicule électrique peut comprendre un microprocesseur.

La Figure 1A comprend un bloc 104 de transmission sans fil de données par une passerelle à réseau, ou « gateway », placée dans le sac-à-dos, vers un terminal portable. Cette passerelle à réseau peut opérer par ondes radios, par exemple par wifi, Bluetooth ou infrarouges. Cette passerelle peut permettre de relier deux réseaux informatiques de types différents, par exemple un réseau local et le réseau Internet. La passerelle 212 peut être un modem-routeur ou box qui permet de relier un réseau local au réseau Internet. Une passerelle peut effectuer le routage de paquets d'informations ou de données et peut éventuellement effectuer des traitements sur ceux-ci. La passerelle peut avoir un rôle de pare-feu, de proxy, ou effectuer de la qualité de service, etc. Cette passerelle permet l'utilisation d'un terminal portable dans le cadre de l'utilisation et du contrôle du véhicule électrique, ceci sans nécessité d'intégrer une telle passerelle au véhicule électrique lui-même. Cette passerelle placée dans le sac-à-dos permet l'interconnexion entre le terminal portable et le véhicule électrique.

La Figure 1A comprend un bloc 105 de transmission par câble 213 vers le véhicule électrique 200 d'électricité provenant de la batterie 211, des commandes de contrôle de la batterie étant déterminées par interprétation des données d'entrée 201. Dans l'exemple représenté par la Figure 2A, l'interprétation de données est effectuée par un contrôleur du terminal portable, le système 222 de contrôle de la batterie et le système 221 de contrôle du véhicule électrique étant virtualisés par un contrôleur mettant en oeuvre ces fonctions dans le terminal portable. Ceci permet de réduire les coûts du véhicule électrique 200 ainsi que les coûts du sac-à-dos 210. Les commandes de contrôle de la batterie peuvent comprendre par exemple la détermination de l'utilisation d'un certain nombre de cellules de la batterie, la détermination de non utilisation d'un certain nombre de cellules de la batterie ou le reversement (ou équilibrage) d'énergie à partir de cellules de la batterie plus chargées vers des cellules de la batterie moins chargées.

La Figure 1B illustre un autre exemple de procédé selon cet exposé. Les blocs 101-105 ayant dans cette exemple la même fonction que les blocs illustrés dans la Figure 1A ne sont pas discutés et sont numérotés de la même manière. Le procédé selon la Figure 2B peut être mis en oeuvre par exemple en utilisant le véhicule électrique 200, le sac-à-dos 210 et le terminal portable 220 illustrés par la Figure 2B. Les éléments de la Figure 2B correspondants aux éléments de la Figure 2A sont numérotés de la même manière.

La Figure 1B comprend un bloc 106 de transmission de données de sortie du système de contrôle de la batterie vers le système de contrôle du véhicule et du système de contrôle du véhicule vers un circuit de commande d'un moteur électrique du véhicule. Dans l'exemple illustré sur la Figure 2B, le système 222 de contrôle de la batterie et le système 221 de contrôle du véhicule sont implémentés virtuellement dans le terminal portable 220. Dans cet exemple de la Figure 2B, la transmission 106 de données de sortie du système de contrôle de la batterie vers le système de contrôle du véhicule peut donc avoir lieu directement au sein du terminal portable. Dans cet exemple de la Figure 2B, la transmission de données de sortie du système de contrôle du véhicule vers un circuit de commande d'un moteur électrique du véhicule peut prendre place par le biais de la passerelle 212 placée dans le sac-à-dos 210 au moyen de la communication 202 reliant la passerelle placée dans le sac-à-dos au véhicule électrique comprenant le moteur électrique 205 ainsi que son circuit de commande 206. Dans certains cas le circuit de commande du moteur électrique ne procède pas au traitement d'informations, mais comprend différents composants éléments électroniques dits « de puissance » tels que des interrupteurs permettant la commande du moteur électrique.

Dans certains cas, tels qu'illustrés par la Figure 2B, les données d'entrée sont reçues par la passerelle à réseau 212 placée dans le sac-à-dos 210. Ceci peut permettre l'exploitation de ces données au moyen d'une unité de traitement de données placée dans le sac-à-dos (une alternative non représentée), ou bien le renvoi de ces données par exemple vers un terminal portable 220.

Dans certains cas, la transmission des données d'entrée est une transmission sans fil, en particulier par ondes radios. Ceci peut avoir lieu par exemple par Wifi, par le protocole Bluetooth, ou par le biais de communication par infrarouge. Ceci peut permettre la transmission à l'aide d'un réseau sans fil local, par exemple vers le sac-à-dos ou vers le terminal portable selon cet exposé. Dans de tels cas, le véhicule électrique comprend un module de transmission sans fil.

La transmission des données d'entrée est reçue par la passerelle à réseau par transmission filaire. Ceci permet par exemple d'éviter d'intégrer au véhicule électrique un module de communication sans fil. La transmission filaire peut être effectuée au moyen d'un câble dédié à la communication entre le véhicule et le sac-à-dos, ce câble ayant ses propres connecteurs, ou bien, alternativement, être intégré au câble 213 qui, selon cet exposé, transmet vers le véhicule électrique 200 de l'électricité provenant de la batterie 211.

Dans certains cas, en particulier tel qu'illustré par la Figure 1B, les données de sortie du système de contrôle de la batterie vers le système de contrôle du véhicule comprennent des paramètres relatifs à l'état de charge de la batterie et les données de sorties du système de contrôle du véhicule vers un circuit de commande d'un moteur électrique du véhicule comprennent des données de commande du moteur électrique. Ceci permet de coordonner et de réguler le fonctionnement de la batterie et du moteur électrique.

Dans certains cas, en particulier dans le cadre du procédé illustré par la Figure 1B mis en oeuvre selon l'architecture illustrée par la Figure 2B, les données de sortie sont transmises au moins en partie par le terminal portable 220. Dans ce même exemple, les données de sortie sont également transmises au moins en partie par la passerelle à réseau 212. Des architectures alternatives, non illustrées, peuvent inclure par exemple le système de contrôle de la batterie dans le sac-à-dos, par exemple par le biais d'une carte électronique dédiée, ou bien l'inclusion du système de contrôle de la batterie ainsi que du système de contrôle du véhicule dans le sac-à-dos. L'inclusion de l'un de ces systèmes de contrôle ou des deux systèmes de contrôles dans le terminal portable permet cependant d'utiliser l'unité de traitement dudit terminal portable à cet effet, évitant donc de placer dans le sac-à-dos des composants additionnels.

Dans certains cas, la transmission des données de sortie est une transmission sans fil, en particulier par ondes radios. Ceci peut avoir lieu par exemple par Wifi, par le protocole Bluetooth, ou par le biais de communication par infrarouge. Ceci peut permettre la transmission à l'aide d'un réseau sans fil local, par exemple vers le sac-à-dos ou vers le véhicule électrique selon cet exposé. Dans de tels cas, le véhicule électrique comprend un module de transmission sans fil.

Dans certains cas, la transmission des données de sortie est au moins en partie par transmission filaire. Ceci permet par exemple d'éviter d'intégrer au véhicule électrique un module de communication sans fil. La transmission filaire peut être effectuée au moyen d'un câble dédié à la communication entre le véhicule et le sac-à-dos, ce câble ayant ses propres connecteurs, ou bien, alternativement, être intégré au câble 213 qui, selon cet exposé, transmet vers le véhicule électrique 200 de l'électricité provenant de la batterie 211.

La Figure 2B illustre un exemple 220 de terminal portable selon cet exposé. Ce terminal portable peut permettre de communiquer par ondes radio avec un réseau de communication cellulaire. Ce terminal portable peut être un téléphone portable, smartphone, téléphone cellulaire, téléphone mobile ou une tablette connectée. Ce terminal portable peut permettre de communiquer par satellite. Ce terminal portable peut comprendre une carte à puce, éventuellement virtuelle, appelée carte SIM (Subscriber Identity Module). Ce terminal portable peut permettre d'effectuer des paiements, par exemple des paiements liés à la location d'un véhicule ou d'un sac-à-dos selon cet exposé. Ce terminal portable peut comprendre un contrôleur du terminal portable tel que le contrôleur 223 du terminal portable 220, le contrôleur du terminal portable étant configuré pour participer à la mise en oeuvre d'un procédé selon cet exposé.

Dans certains cas, le terminal portable comprend une mémoire de stockage informatique, ou support d'enregistrement lisible par microprocesseur, telle que, par exemple, la mémoire 224, la mémoire 224 comprenant des instructions 225 qui, lorsqu'elles sont exécutées par un microprocesseur, conduisent celui-ci à mettre en oeuvre le procédé selon le présent exposé.

Au-delà de ce terminal portable, les procédés selon cet exposé peuvent être exécutés par un microprocesseur inclus dans in système informatique, le système informatique comprenant un support d'enregistrement lisible par microprocesseur et comprenant des instructions qui, lorsqu'elles sont exécutées par le microprocesseur, conduisent celui-ci à mettre en oeuvre les procédés. Un tel système informatique peut être intégré dans le sac-à-dos, ou être accessible par réseau.

Dans certains cas, le contrôleur du terminal portable est en outre configuré pour mettre en oeuvre une méthode de location du véhicule électrique par un utilisateur du terminal portable. Cette méthode de location du véhicule électrique par un utilisateur du terminal portable peut être une application de véhicule électrique. Cette méthode de location du véhicule électrique peut communiquer à un utilisateur, par le biais du terminal portable, où se trouvent un ou des véhicules électriques selon cet exposé à proximité de l'endroit où se trouve le terminal portable. Cette méthode de location du véhicule électrique peut communiquer à un utilisateur, par le biais du terminal portable, où se trouvent un ou des sacs-à-dos selon cet exposé à proximité de l'endroit où se trouve le terminal portable. Cette méthode de location du véhicule électrique peut communiquer à un utilisateur, par le biais du terminal portable, où se trouvent un ou des stations de recharges de sac-à-dos selon cet exposé à proximité de l'endroit où se trouve le terminal portable. Cette méthode de location du véhicule électrique peut communiquer à un utilisateur, par le biais du terminal portable, où se trouvent un ou des stations de location de véhicules électriques à guidon selon cet exposé à proximité de l'endroit où se trouve le terminal portable.

Dans certains cas, le terminal portable permet de démarrer, de verrouiller ou d'arrêter le véhicule électrique ou la batterie. Dans certains cas, le terminal portable permet la saisie d'un code permettant de démarrer, de verrouiller ou d'arrêter le véhicule électrique ou la batterie. Un tel code peut par exemple être de nature numérique, gestuelle, verbale ou biométrique.

Le terminal portable peut dans certains cas comprendre le système de contrôle de la batterie. Un exemple de terminal portable comprenant le système de contrôle de la batterie est illustré par la Figure 2B. Le terminal portable 220 comprend en effet le système 222 de contrôle de la batterie. Dans ce cas, le système de contrôle de la batterie est implémenté de manière virtuelle par le contrôleur 223 du terminal portable.

Le terminal portable peut dans certains cas comprendre le système de contrôle du véhicule électrique. Un exemple de terminal portable comprenant le système de contrôle de la batterie est illustré par la Figure 2B. Le terminal portable 220 comprend en effet le système 221 de contrôle du véhicule électrique. Dans ce cas, le système de contrôle du véhicule électrique est implémenté de manière virtuelle par le contrôleur 223 du terminal portable.

La Figure 3A représente un exemple de sac-à-dos 300 permettant la mise en oeuvre d'un procédé tel qu'exposé, le sac-à-dos 300 comprenant :
- une batterie 301 destinée à alimenter en électricité un véhicule électrique à guidon ;
- des capteurs 302 de mesure de caractéristiques de la batterie 301 ;
- un circuit de commande 303 de la batterie 301 permettant l'actionnement de composants électroniques de la batterie 301 ;
- une passerelle à réseau 304 destinée à communiquer sans fil avec un terminal portable ; et
- un câble 305 permettant la connexion entre la batterie et le véhicule électrique.

Dans certains cas, la batterie est une batterie au lithium, lithium ion, lithium-fer-phosphate (LiFePO4) ou lithium polymère (Li-Po). Dans certains cas, la batterie est une batterie plomb ou nickel. Dans certains cas, la batterie pèse moins de 4 kg. Dans certains cas, la batterie pèse moins de 3.5 kg. Dans certains cas, la batterie pèse moins de 3 kg. Dans certains cas, la batterie pèse moins de 2.5 kg. Dans certains cas, la batterie pèse moins de 2 kg. Dans certains cas, la charge complète de la batterie demande de 3 à 8 heures. Dans certains cas, la batterie est selon la norme ISO4210-10. Dans certains cas, la batterie a une capacité de plus de 400 Wh. Dans certains cas, la batterie a une capacité de plus de 500 Wh.

Dans certains cas, les capteurs comprennent un ou plusieurs capteurs de courant, de tension, de température ou de pression. Dans certains cas, ces capteurs transmettent des données au système de contrôle de la batterie.

Dans certains cas, le circuit de commande comprend un circuit imprimé permettant l'actionnement de composants électroniques de la batterie tels que des composants d'électronique dites de puissance tels que des interrupteurs par exemple.

La Figure 3B illustre un autre exemple de sac-à-dos 310 selon cet exposé. La numérotation de la figure 3B est identique à la numérotation de la Figure 3A lorsqu'elle s'applique à des composants jouant le même rôle.

Le sac-à-dos 310 représenté sur la Figure 3B comprend une pluralité d'adaptateurs 315 permettant la connexion par câble à différents types de véhicules électriques à guidon. Ces adaptateurs peuvent être liés à un même câble ou être liés à de différents câbles. Ces adaptateurs peuvent être associés à différents connecteurs. Ces adaptateurs peuvent être associés à des caractéristiques différentes de tension et d'intensité. Une telle pluralité d'adaptateurs peut être comprise dans différents sac-à-dos selon cet exposé. Ces adaptateurs peuvent offrir différentes catégories de connections telles qu'une connexion de type USB pour charger certains appareils, ou des connections de courant continues de 12, 24 ou 36V par exemple.

Le sac-à-dos 310 représenté sur la Figure 3B comprend un compartiment 316, la batterie 301 étant placée dans le compartiment étanche 316, le compartiment étanche 316 permettant l'évacuation de chaleur produite par le fonctionnement de la batterie 301. Dans certains cas, le compartiment étanche comprend une ou plusieurs valves s'ouvrant au-delà d'une pression de sécurité déterminée. Le compartiment étanche peut comprendre ou être formé d'une membrane imperméable à l'eau mais laissant passer la vapeur d'eau, telle que par exemple une membrane de composée de polytétrafluoroéthylène (PTFE) étiré. Un tel compartiment peut être compris dans différents sac-à-dos selon cet exposé. Dans certains cas, le compartiment 316 comprend une première face 317 destinée à être orientée dans la direction du dos d'un porteur du sac-à-dos et une seconde face 318 orientée vers une direction différente à celle du dos d'un porteur du sac-à-dos 310, la première face 317 ayant un facteur de transmission thermique inférieur à un facteur de transmission thermique de la seconde face 318. Dans certains cas, la première face comprend un isolant thermique tel qu'une mousse de polymère, de l'air emprisonné ou de l'aérogel. Dans certains cas, la première face a une conductivité thermique 50% plus élevés que la conductivité thermique d'une seconde face. Dans certains cas, la conductivité thermique de la première face est de moins de 50 mW/(m.K).

Dans certains cas le sac-à-dos comprend également un compartiment isotherme permettant de conserver, par exemple, un appareil sensible à la chaleur tel qu'un ordinateur portable, des aliments ou des boissons.

Dans certains cas, le sac-à-dos comprend un connecteur permettant d'interconnecter la batterie et le câble d'alimentation. Dans certains cas, le sac-à-dos comprend des connections filaires intégrées permettant d'interconnecter la batterie et le câble d'alimentation.

Dans certains cas, le compartiment est amovible. Dans certains cas, le compartiment amovible est associé à un mécanisme de fermeture à glissière. Dans certains cas, le compartiment amovible est associé à un mécanisme composé de deux bandes de textile recouvertes chacune d'une texture différente (par exemple l'une de type velours, l'autre de type crochet) permettant, lorsqu'on les met en contact, d'obtenir une liaison amovible. Dans certains cas le compartiment amovible est associé à un système de ceinture. Dans certains cas le compartiment est associé à une poignée ou à une bandoulière. De tels mécanismes ou systèmes facilitant la modularité peuvent être compris et combinés dans un sac-à-dos selon cet exposé.

Le câble permettant la connexion entre la batterie et le véhicule électrique permet en outre la transmission de données entre le véhicule électrique et la passerelle à réseau. Dans certains cas, ce câble est associé à un connecteur permettant la transmission de puissance électrique ainsi que de données.

Dans certains cas, la passerelle à réseau placée dans le sac-à-dos permet l'échange de données sans fil entre le véhicule électrique et la passerelle à réseau, par exemple par ondes radios, par exemple par wifi, Bluetooth ou infrarouges.

Dans certains cas, le sac-à-dos peut être équipé ou comprendre un organe de commande tel que l'organe de commande 320 placé sur une bretelle 319 du sac-à-dos 310. Un tel organe de commande peut fonctionner de manière mécanique, tactile, ou par commande vocale. Un tel organe de commande peut comprendre un écran tactile, un ou plusieurs actionneurs mécaniques ou un microphone. Un tel organe de commande peut permettre d'influencer le contrôle du véhicule ou de la batterie. Un tel organe de commande peut permettre d'allumer ou d'éteindre le véhicule ou la batterie. Un tel organe de commande peut permettre une interaction avec le système de contrôle du véhicule ou avec le système de contrôle de la batterie sans perdre le contrôle du guidon.

Dans certains cas, le sac-à-dos, tel que le sac-à-dos 310 par exemple, comprend le système 321 de contrôle de la batterie. Dans certains cas, le sac-à-dos, tel que le sac-à-dos 310 par exemple, comprend le système 322 de contrôle du véhicule électrique. Dans certains cas, de tels systèmes de contrôle sont associés à un ou plusieurs microprocesseurs ou unités de traitement de données placées dans le sac-à-dos. Ceci permet d'éviter d'intégrer de tels éléments ou composants au véhicule électrique selon cet exposé.

Dans certains cas, un sac-à-dos selon cet exposé peut être utilisé pour alimenter en électricité un outil équipé d'un moteur électrique tel qu'une perceuse, ponceuse, meuleuse, malaxeuse, soudeuse, scie, fraiseuse, visseuse, aspirateur ou compresseur pas exemple.

Un sac-à-dos selon cet exposé peut permettre l'utilisation de différentes batteries en remplaçant une batterie par une autre, par exemple en vue d'utiliser une batterie nouvelle plus performante sans changer de sac-à-dos. Le sac-à-dos peut être adapté à un usage dédié au loisir, ou à un usage professionnel, en sélectionnant les caractéristiques de la batterie de manière correspondante.

La Figure 4 illustre un exemple de station de recharge 400 selon cet exposé. La station de recharge 400 comprend une pluralité de sac-à-dos 401-405 selon cet exposé ainsi qu'une source d'énergie électrique 420 permettant de recharger les batteries des sacs-à-dos. La source d'énergie électrique peut être une connexion à un réseau de distribution d'électricité. La station de recharge peut en outre comprendre des batteries 410 destinées à être chargées. Les batteries peuvent être chargées lorsque placées dans le sac-à-dos associé, ou en être retiré pour être rechargées. Les sacs-à-dos disponibles dans la station 400 peuvent avoir des caractéristiques différentes afin de répondre à des besoins différents d'éventuels utilisateurs. La disponibilité de sac-à-dos de différentes caractéristiques peut répondre à une distribution déduite de statistique liées à l'utilisation de tels sac-à-dos afin de s'adapter à la demande. Les caractéristiques différentes peuvent comprendre différents poids de sac-à-dos, différentes tailles de sac-à-dos, différentes capacités de batterie en par exemple en différents niveaux d'ampères-heure (Ah) ou de Watt-heure (Wh) disponibles, différentes combinaison de composants du sac-à-dos (par exemple avec ou sans contrôle de batterie intégré, avec ou sans contrôle de véhicule intégré, avec communication filaire de données avec un véhicule électrique, avec ou sans adaptateurs multiples). De telles stations de recharge peuvent être placées dans ou à proximité de stations de transports en commun et permettre la location et la maintenance de sac-à-dos selon cet exposé, indépendamment ou en combinaison avec la location ou la maintenance de véhicules électriques selon cet exposé. De telles stations de recharges peuvent permettre l'échange d'une batterie déchargée pas une batterie chargée, ou l'échange d'un sac-à-dos comprenant une batterie déchargée par un sac-à-dos comprenant une batterie chargée.

Dans certains cas, la passerelle à réseau selon cet exposé comprend un contrôleur de la passerelle à réseau configuré pour mettre en oeuvre un procédé selon cet exposé. Un tel contrôleur de la passerelle à réseau peut par exemple permettre de communiquer sans fil avec le véhicule électrique. Un tel contrôleur de la passerelle à réseau permet de communiquer sans fil avec le terminal portable selon cet exposé. Un tel contrôleur de la passerelle à réseau peut permettre de gérer la communication de données d'entrée de manière filaire ou de sortie de manière filaire ou sans fil selon cet exposé. La passerelle à réseau peut dans certains cas permettre de communique par ondes radio avec un réseau de communication cellulaire. La passerelle à réseau peut dans certains cas peut dans certains cas permettre de communiquer par satellite. La passerelle à réseau peut dans certains cas comprendre une carte à puce, éventuellement virtuelle, appelée carte SIM (Subscriber Identity Module). La passerelle à réseau peut dans certains cas permettre d'effectuer des paiements, par exemple des paiements liés à la location d'un véhicule ou d'un sac-à-dos selon cet exposé.

La Figure 5 illustre un exemple de véhicule électrique 500 selon cet exposé. Le véhicule 500 comprend :
- un moteur électrique 501 destiné à propulser le véhicule électrique 500;
- des capteurs 502 de mesure de caractéristiques du véhicule électrique ;
- un circuit 503 de commande du moteur électrique permettant l'actionnement de composants électroniques 504 du moteur électrique 501 ;
- une interface 505 de communication du moteur électrique destinée à échanger des données entre le circuit 503 de commande du moteur électrique 501 et un système de contrôle du véhicule;
- un connecteur 506 permettant la connexion entre le moteur électrique 501 et un câble d'alimentation du moteur électrique par une batterie placée dans un sac-à-dos selon cet exposé; et
- le système de contrôle du véhicule et un système de contrôle de la batterie étant externe au véhicule électrique.

Le moteur électrique d'un véhicule selon cet exposé permet d'assurer ou de participer à la propulsion du véhicule électrique. Dans certains cas, le moteur est l'un des moteurs suivants :
- Moteur moyeu inséré en lieu et place d'un axe de roue avant ou arrière.
- Moteur déporté : la transmission du mouvement se fait par une courroie ou une chaîne agissant sur un plateau de transmission placé sur l'axe d'une roue.
- Moteur pédalier agissant directement sur un axe de pédalier du véhicule.
- Moteur à friction par galet sur la bande de roulement d'un pneumatique avant ou arrière

Dans certains cas, le moteur est un moteur sans balais. Dans certains cas le moteur est un moteur synchrone autopiloté à aimants permanents tel qu'un moteur applicable à tout type de véhicule à moteur électrique à guidon, incluant notamment les bicyclettes et motocyclettes ayant un moteur électrique comme moyen de propulsion.

Dans une réalisation, le véhicule électrique comprend au moins un bus de données apte à transmettre une estimation de position au système de contrôle du moteur électrique et apte à transmettre un signal de commande émis par le système de contrôle du moteur électrique sur la base de l'estimation de position.

Le pilotage du fonctionnement du moteur électrique en fonction de ladite estimation de position est mis en oeuvre d'une manière propre au type de moteur électrique du véhicule.

Dans certains cas, le véhicule électrique comprend un interrupteur permettant l'allumage ou l'arrêt dudit véhicule, cet interrupteur étant connecté au système de contrôle du véhicule se trouvant soit dans le sac-à-dos soit dans le terminal portable selon cet exposé.

Tous les moteurs électriques comprennent un élément mobile en rotation, ou rotor, et un élément fixe, ou stator. Dans un mode de réalisation, le moteur électrique du véhicule est un moteur sans balais. Un tel moteur, également désigné par les termes « brushless » ou « bldc » peut être utilisé pour la propulsion de véhicules électriques. Trois principaux types de moteurs électriques sont actuellement utilisés dans l'industrie automobile : les moteurs à aimants permanents, les moteurs à induction, et les moteurs à rotor bobiné. Dans le cas des moteurs à aimants permanents, le rotor d'un moteur sans balais comprend au moins un aimant permanent. Le stator comprend au moins un enroulement (ou bobinage) agissant comme un électro-aimant. Dans certains cas le moteur sans balais est triphasé et le stator comprend trois groupes de bobines reliées entre elles.

Dans un exemple, le système de contrôle du moteur applique une séquence de commutation qui consiste à alimenter successivement les groupes de bobines du stator. Cette alimentation successive a pour effet de créer un champ magnétique tournant. L'aimant permanent du rotor s'alignant sur le champ magnétique, le rotor entre en rotation, ce qui entraîne la rotation d'un arbre du moteur.

Pour mettre en oeuvre la séquence de commutation, le système de contrôle du moteur sans balais reçoit à chaque instant, par un capteur de position angulaire, une estimation de position relative du rotor par rapport au stator. Sur la base de cette estimation, le système de contrôle du moteur pilote le moteur pour entretenir la rotation du rotor. Le système de contrôle du moteur peut par exemple régler en permanence le courant pour que le moteur fonctionne dans sa zone de rendement maximum.

De manière générale, l'estimation de position angulaire du rotor par rapport au stator permet au système de contrôle du moteur de maintenir un contrôle précis du moteur. En effet, tout désalignement ou changement de phase entre la position attendue et la position réelle du rotor par rapport au stator peut entraîner un comportement indésirable et une baisse de performance du moteur électrique.

Les capteurs capteur de mesure de caractéristiques du véhicule électrique peuvent par exemple comprendre :
- un capteur à effet Hall tel qu'un capteur à effet Hall fixé à un stator qui mesure une variation de champ magnétique lors du passage de pôles d'un rotor, la variation étant indicative d'une estimation de position angulaire du rotor,
- un codeur rotatif optique fixé au stator qui détecte la présence d'une strie sur le rotor, la position angulaire du rotor étant déterminée sur la base d'une table de correspondance associant la présence de ladite strie à une estimation de position angulaire du rotor,
- un voltmètre, en l'espèce interne au moteur électrique, qui mesure dans chaque enroulement du stator une force contre-électromotrice induite par la rotation du rotor mesurée par rapport à un point commun des enroulements appelé « neutre », les variations relatives des forces contre-électromotrices ainsi mesurées étant indicatives d'une estimation de position angulaire du rotor.

Comparativement à un moteur à combustion, le couple d'un moteur électrique est élevé quelle que soit la vitesse de rotation du rotor du moteur. Pour cette raison, les véhicules à moteur électriques sont généralement dénués de boite de vitesses et d'embrayage. Par conséquent, la vitesse de rotation du rotor du moteur électrique est proportionnelle à la vitesse de rotation de la ou des roues motrices du véhicule.

Dans un mode particulier d'une telle réalisation, les capteurs de mesure de caractéristiques du véhicule électrique comprennent un capteur de position angulaire monté sur au moins une roue du véhicule. Un tel récepteur est apte à mesurer une position angulaire de ladite roue du véhicule. Cette mesure de position angulaire peut être répétée après un intervalle de temps prédéfini de manière à calculer une vitesse moyenne de rotation de ladite roue au cours de cet intervalle de temps.

Dans certains cas, les caractéristiques du véhicule électrique comprenant des paramètres de position, de mouvement, de couple, d'angle, de vitesse de rotation, d'action de freinage ou de durée.

Dans certains cas, le véhicule selon cet exposé permet une utilisation en tant que cycle à pédalage assisté (CPA), le moteur électrique ayant une puissance nominale continue inférieure ou égale à 250 Watts, dont l'alimentation s'interrompt si le cycliste cesse de pédaler, et se réduit puis s'interrompt lorsque la vitesse du véhicule atteint 25 km/h.

Dans certains cas, le véhicule selon cet exposé est un véhicule avec assistance électrique. Cette assistance a pour objectif de fournir un complément au pédalage. Dans ce cas, des capteurs détectent la présence de pédalage, sa cadence, l'effort exercé sur les pédales, la position d'un éventuel accélérateur et le freinage.

Dans certains cas, le véhicule électrique comprend un pédalier, les capteurs comprenant un capteur de couple du pédalier.

Dans certains cas, le véhicule électrique comprend un actionneur de freinage, les capteurs comprenant un capteur lié à l'actionneur de freinage.

Dans certains cas, le véhicule électrique selon cet exposé pèse moins de 100 kilogrammes. Dans certains cas, le véhicule électrique selon cet exposé pèse moins de 80 kilogrammes. Dans certains cas, le véhicule électrique selon cet exposé pèse moins de 60 kilogrammes. Dans certains cas, le véhicule électrique selon cet exposé pèse moins de 40 kilogrammes. Dans certains cas, le véhicule électrique selon cet exposé pèse moins de 20 kilogrammes. Dans certains cas, le véhicule électrique selon cet exposé pèse moins de 15 kilogrammes. De tels poids peuvent en particulier être obtenus du au nombre réduit de composants intégrés au véhicule électrique.

La Figure 6 illustre un exemple de station 600 de location de véhicules électriques à guidon selon cet exposé. La station 600 de location de véhicules électriques à guidon comprend une pluralité de véhicules électriques à guidon 601-605 selon cet exposé. Les véhicules électriques à guidon disponibles dans la station 600 peuvent avoir des caractéristiques différentes afin de répondre à des besoins différents d'éventuels utilisateurs. Les caractéristiques différentes peuvent comprendre différents types de véhicules électriques, par exemple classifiés par nombre de passagers transportables, par vitesse maximum atteignable, par stabilité ou nombre de roues ou d'axes, par type de motorisation, par puissance de motorisation, par type de connecteur disponible afin de permettre une connexion à un sac-à-dos selon cet exposé ou bien par taille. De telles stations de location peuvent être placées dans ou à proximité de stations de transports en commun et permettre la location et la maintenance de véhicules électriques selon cet exposé, indépendamment ou en combinaison avec la location ou la maintenance de sac-à-dos selon cet exposé. La disponibilité d'un véhicule électrique de différentes caractéristiques peut répondre dans une station de location de véhicules électriques à guidon à une distribution de différents types de véhicules électriques déduite de statistique liées à l'utilisation de tels véhicules électriques afin de s'adapter à la demande.

La Figure 7 représente un exemple d'échange de données selon un exemple de procédé selon cet exposé. Les données sont dans cette représentation échangées entre le véhicule électrique 701, le sac-à-dos 702 et le terminal portable 703. Dans cet exemple, un utilisateur dispose du sac-à-dos 702 contenant une batterie chargée et une passerelle à réseau. L'utilisateur dispose également du terminal portable 703 connecté à la passerelle réseau comprise dans le sac-à-dos 702 par le biais de Bluetooth. Le terminal portable 703 comprend un microprocesseur mettant en oeuvre une application de location du véhicule électrique 701, un contrôleur virtuel de batterie pour la batterie comprise dans le sac-à-dos 702 et un contrôleur du véhicule électrique 701. L'utilisateur, ou usager, s'approche du véhicule 701 et branche un câble d'alimentation de son sac-à-dos 702 sur le véhicule, ce câble permettant l'alimentation du moteur électrique du véhicule ainsi que le transfert de données. Suite au branchement, le véhicule 701 envoie, comme représenté par la flèche 710, vers la passerelle à réseau des données d'entrée qui concernent le positionnement relatif du stator et du rotor du moteur électrique et le couple ressenti sur un pédalier du véhicule. Ces données sont transférées par le câble dans cet exemple, en utilisant le format CAN. La passerelle transfère ces données d'entrée par Bluetooth au terminal portable 703 tel que représenté par la flèche 720. La passerelle ajoute à ces données 720 relatives au véhicule des données concernant le niveau de charge de la batterie, tel que représenté par la flèche 721. Le terminal portable 703 procède à l'analyse et à l'interprétation de ces données par le système de contrôle du véhicule et par le système de contrôle de la batterie, et renvoie du système de contrôle du véhicule vers la passerelle des données de sortie destinées à la commande du moteur représentées par la flèche 730 et du système de contrôle de la batterie à la commande de la batterie, représentées par la flèche 731. La passerelle transfère les données de commande de la batterie vers le circuit de commande de la batterie placé dans le sac-à-dos, par exemple en utilisant un bus CAN placé dans le sac-à-dos 702, et transfère par le biais du câble, un courant d'alimentation et les données de commande du moteur électrique, comme illustré par la flèche 730, vers le véhicule électrique 701. Ce cycle de communication se reproduit au cours du temps, permettant l'utilisation du véhicule électrique selon un procédé quel que décrit dans cet exposé.

## Revendications

1. Procédé (100, 110) destiné à alimenter en électricité un véhicule électrique à guidon à partir d'une batterie placée dans un sac-à-dos, le procédé comprenant :
- la transmission (101), par le véhicule électrique, de données d'entrée ;
- le contrôle (102) de la batterie au moyen d'un système de contrôle de la batterie;
- le contrôle (103) du véhicule électrique au moyen d'un système de contrôle du véhicule ;
- la transmission (104) sans fil de données par une passerelle à réseau, placée dans le sac-à-dos, vers un terminal portable ; et
- la transmission (105) par câble vers le véhicule électrique d'électricité provenant de la batterie, des commandes de contrôle de la batterie étant déterminées par interprétation des données d'entrée ;
- le procédé étant **caractérisé par** la réception des données d'entrée par la passerelle à réseau par transmission filaire.

2. Un procédé selon la revendication 1, les données d'entrée comprenant des paramètres de mise en route, d'arrêt, de degré d'assistance, de position, de mouvement, de couple, d'angle, de vitesse de rotation, d'action de freinage ou de durée.

3. Un procédé (110) selon l'une quelconque des revendications précédentes comprenant en outre la transmission (106) de données de sortie du système de contrôle de la batterie vers le système de contrôle du véhicule et du système de contrôle du véhicule vers un circuit de commande d'un moteur électrique du véhicule.

4. Un procédé selon la revendication 3, les données de sortie du système de contrôle de la batterie vers le système de contrôle du véhicule comprenant des paramètres relatifs à l'état de charge de la batterie et les données de sorties du système de contrôle du véhicule vers le circuit de commande du moteur électrique du véhicule comprenant des données de commande du moteur électrique.

5. Un procédé selon l'une quelconque des revendications 3 ou 4, les données de sortie étant transmises au moins en partie par le terminal portable, au moins en partie par la passerelle à réseau, ou au moins en partie par transmission filaire.

6. Un procédé selon l'une quelconque des revendications précédentes comprenant l'interprétation des données d'entrée par un contrôleur du terminal portable.

7. Sac-à-dos (210, 300) comprenant :
- une batterie (211, 301) destinée à alimenter en électricité un véhicule électrique à guidon ;
- des capteurs (302) de mesure de caractéristiques de la batterie ;
- un circuit de commande (303) de la batterie permettant l'actionnement de composants électroniques de la batterie ;
- une passerelle à réseau (212, 304) destinée à communiquer sans fil avec un terminal portable; et
- un câble (213, 305) permettant la connexion entre la batterie et le véhicule électrique,
- le sac-à-dos étant **caractérisé en ce que** le câble (213, 305) permet en outre la transmission de données entre le véhicule électrique et la passerelle à réseau.

8. Un sac-à-dos selon la revendication 7, le sac-à-dos comprenant en outre une pluralité d'adaptateurs (315) permettant la connexion par câble à différents types de véhicules électriques à guidon.

9. Un sac-à-dos selon l'une quelconque des revendications 7 ou 8, la batterie (301) étant placée dans un compartiment étanche (316) et permettant l'évacuation de chaleur produite par le fonctionnement de la batterie, le compartiment étant éventuellement amovible.

10. Un sac-à-dos selon la revendication 9, le compartiment comprenant une première face (317) destinée à être orientée dans la direction du dos d'un porteur du sac-à-dos et une seconde face (318) orientée vers une direction différente à celle du dos du porteur du sac-à-dos, la première face ayant un facteur de transmission thermique inférieur à un facteur de transmission thermique de la seconde face.

11. Un sac-à-dos selon l'une quelconque des revendications 7 à 10, la passerelle à réseau permettant l'échange de données sans fil entre le véhicule électrique et la passerelle à réseau.

12. Un sac-à-dos selon l'une quelconque des revendications 7 à 11, le sac-à-dos comprenant un organe de commande (320) placé sur une bretelle (319) du sac-à-dos.

13. Un sac-à-dos selon l'une quelconque des revendications 7 à 12, le sac-à-dos comprenant un système de contrôle de la batterie, un système de contrôle du véhicule, ou un système de contrôle de la batterie et un système de contrôle du véhicule.

14. Station de recharge (400) comprenant une pluralité de sac-à-dos selon l'une quelconque des revendications 7 à 13 ainsi qu'une source (420) d'énergie électrique permettant de recharger les batteries des sacs-à-dos.

## Patentansprüche

1. Verfahren (100, 110) zum Versorgen eines lenkbaren Elektrofahrzeugs mit Strom aus einer Batterie, die in einem Rucksack untergebracht ist, wobei das Verfahren umfasst:
- die Übertragung (101) von Eingangsdaten durch das Elektrofahrzeug;
- die Überwachung (102) der Batterie mit Hilfe eines Batterieüberwachungssystems;
- die Überwachung (103) des Elektrofahrzeugs mit Hilfe eines Fahrzeugüberwachungssystems ;
- die drahtlose Übertragung (104) von Daten über ein Netzwerk-Gateway, das sich im Rucksack befindet, an ein tragbares Endgerät; und
- die Übertragung (105) von Strom aus der Batterie über Kabel an das Elektrofahrzeug, wobei Befehle zur Steuerung der Batterie durch Interpretation der Eingabedaten bestimmt werden;
- wobei das Verfahren **dadurch gekennzeichnet ist, dass** die Eingabedaten durch das Netzwerk-Gateway durch drahtgebundene Übertragung empfangen werden.

2. Verfahren nach Anspruch 1, wobei die Eingabedaten Parameter für Start, Stopp, Grad der Unterstützung, Position, Bewegung, Drehmoment, Winkel, Drehgeschwindigkeit, Bremswirkung oder Dauer umfassen.

3. Verfahren (110) nach einem der vorhergehenden Ansprüche, ferner umfassend die Übertragung (106) von Ausgangsdaten von dem Batterieüberwachungssystem an das Fahrzeugüberwachungssystem und von dem Fahrzeugüberwachungssystem an eine Steuerschaltung eines Elektromotors des Fahrzeugs.

4. Verfahren nach Anspruch 3, wobei die Ausgangsdaten des Batterieüberwachungssystems an das Fahrzeugsteuerungssystem Parameter umfassen, die sich auf den Ladezustand der Batterie beziehen, und wobei die Ausgangsdaten des Fahrzeugsteuerungssystems an den Steuerkreis des Elektromotors des Fahrzeugs Steuerdaten für den Elektromotor umfassen.

5. Verfahren nach einem der Ansprüche 3 oder 4, wobei die Ausgangsdaten wenigstens teilweise von dem tragbaren Endgerät wenigstens teilweise durch das Netzwerk-Gateway oder wenigstens teilweise durch drahtgebundene Übertragung übertragen werden.

6. Verfahren nach einem der vorhergehenden Ansprüche, umfassend die Interpretation der Eingabedaten durch einen Controller des tragbaren Endgeräts.

7. Rucksack (210, 300), umfassende:
- eine Batterie (211, 301), die dazu gedacht ist, ein lenkbares Elektrofahrzeug mit Strom zu versorgen;
- Sensoren (302) zur Messung von Eigenschaften der Batterie;
- eine Steuerschaltung (303) der Batterie, die die Betätigung von elektronischen Komponenten der Batterie ermöglicht;
- ein Netzwerk-Gateway (212, 304), das dazu gedacht ist, drahtlos mit einem tragbaren Endgerät zu kommunizieren; und
- ein Kabel (213, 305), das die Verbindung zwischen der Batterie und dem Elektrofahrzeug ermöglicht,
- wobei der Rucksack **dadurch gekennzeichnet ist, dass** das Kabel (213, 305) weiterhin die Übertragung von Daten zwischen dem Elektrofahrzeug und dem Netzwerk-Gateway ermöglicht.

8. Rucksack nach Anspruch 7, wobei der Rucksack ferner eine Vielzahl von Adaptern (315) umfasst, die eine Kabelverbindung zu verschiedenen Arten von lenkbaren Elektrofahrzeugen ermöglichen.

9. Rucksack nach einem der Ansprüche 7 oder 8, wobei die Batterie (301) in einem wasserdichten Fach (316) untergebracht ist und die Ableitung von Wärme ermöglicht, die durch den Betrieb der Batterie erzeugt wird, wobei das Fach gegebenenfalls abnehmbar ist.

10. Rucksack nach Anspruch 9, wobei das Fach eine erste Seite (317) umfasst, die dazu gedacht ist, in Richtung des Rückens eines Rucksackträgers ausgerichtet zu werden, und eine zweite Seite (318) umfasst, die in eine andere Richtung als die des Rückens des Rucksackträgers ausgerichtet ist, wobei die erste Seite einen Wärmedurchlassgrad hat, der kleiner ist als ein Wärmedurchlassgrad der zweiten Seite.

11. Rucksack nach einem der Ansprüche 7 bis 10, wobei das Netzwerk-Gateway den drahtlosen Datenaustausch zwischen dem Elektrofahrzeug und dem Netzwerk-Gateway ermöglicht.

12. Rucksack nach einem der Ansprüche 7 bis 11, wobei der Rucksack ein Bedienelement (320) umfasst, das an einem Schultergurt (319) des Rucksacks angeordnet ist.

13. Rucksack nach einem der Ansprüche 7 bis 12, wobei der Rucksack ein Batterieüberwachungssystem, ein Fahrzeugüberwachungssystem oder ein Batterieüberwachungssystem und ein Fahrzeugüberwachungssystem umfasst.

14. Ladestation (400), die eine Vielzahl von Rucksäcken nach einem der Ansprüche 7 bis 13 sowie eine Quelle (420) für elektrische Energie zum Aufladen der Batterien der Rucksäcke umfasst.

## Claims

1. A method (100, 110) for supplying electricity to an electric vehicle with handlebars from a battery placed in a backpack, the method comprising:
- transmitting (101), by the electric vehicle, input data;
- controlling (102) the battery with a battery control system;
- controlling (103) the electric vehicle with a vehicle control system;
- wirelessly transmitting (104) data via a network gateway, placed in the backpack, to a portable terminal; and
- transmitting (105) electricity by cable to the electric vehicle from the battery, battery control commands being determined by interpretation of the input data;
- the method being **characterized by** receiving the input data via the network gateway by cable.

2. The method according to claim 1, the input data comprising startup, shutoff, degree of assistance, position, movement, torque, angle, rotational speed, braking action, or duration parameters.

3. The method (110) according any of the above claims, further comprising transmitting (106) output data from the battery control system to the vehicle control system and from the vehicle control system to a control circuit for an electric motor of the vehicle.

4. The method according to claim 3, the output data from the battery control system to the vehicle control system comprising parameters relating to the state of charge of the battery, and the output data from the vehicle control system to a control circuit for an electric motor of the vehicle comprising control data for the electric motor.

5. The method according to any of claims 3 or 4, the output data being transmitted at least in part by the portable terminal, at least in part by the network gateway, or at least in part by cable.

6. The method according to any of the above claims, comprising interpreting the input data by a controller of the portable terminal.

7. A backpack (210, 300) comprising:
- a battery (211, 301) intended to supply electricity to an electric vehicle with handlebars;
- sensors (302) for measuring characteristics of the battery;
- a battery control circuit (303) enabling the actuation of electronic components of the battery;
- a network gateway (212, 304) intended for wireless communication with a portable terminal; and
- a cable (213, 305) enabling the connection between the battery and the electric vehicle;
- the backpack being **characterized in that** the cable (213, 305) further enables the transmission of data between the electric vehicle and the network gateway.

8. The backpack according to claim 7, the backpack further comprising a plurality of adapters (315) enabling the connection by cable to different types of electric vehicles with handlebars.

9. The backpack according to any of claims 7 or 8, the battery (301) being placed in a sealed compartment (316) and allowing the dissipation of heat produced by the operation of the battery, the compartment being possibly removable.

10. The backpack according to claim 9, the compartment comprising a first side (317) intended to be oriented towards the back of a wearer of the backpack and a second side (318) oriented in a direction different from that of the back of a wearer of the backpack, the first side having a thermal transmittance lower than the thermal transmittance of the second side.

11. The backpack according to any of claims 7 to 10, the network gateway enabling the wireless exchange of data between the electric vehicle and the network gateway.

12. The backpack according to any of claims 7 to 11, the backpack comprising a control member (320) placed on a strap (319) of the backpack.

13. The backpack according to any of claims 7 to 12, the backpack comprising a battery control system, a vehicle control system, or a battery control system and a vehicle control system.

14. A charging station (400) comprising a plurality of backpacks according to any of claims 7 to 13 as well as a source (420) of electrical power for recharging the batteries of the backpacks.
